# FASCICULE DE BREVET EUROPEEN

(11) **EP 0 580 032 B1**
(45) Date de publication et mention de la délivrance du brevet: **21.01.1998**
(21) Numéro de dépôt: 93110972.2
(22) Date de dépôt: 09.07.1993
(51) Int. Cl.: C08K 5/09, C08L 3/00, C08L 67/04

(54) **Compositions de moulage biodégradables comprenant un amidon thermoplastique et un polyester aliphatique thermoplastique**
Bioabbaubare Formzusammensetzungen, enthaltend thermoplastische Stärke und thermoplastischen aliphatischen Polyester
Biodegradable moulding compositions containing thermoplastic starch and thermoplastic aliphatic polyester

(30) Priorité: 15.07.1992 BE 9200656
(43) Date de publication de la demande: 26.01.1994
(73) Titulaire: SOLVAY (Société Anonyme), B-1050 Bruxelles (BE)
(72) Inventeur: Dehennau, Claude, B-1410 Waterloo (BE); Depireux, Thierry, B-1410 Waterloo (BE)
(74) Mandataire: Anthoine, Paul

(56) Documents cités:
- EP-A- 0 497 706
- DE-A- 2 552 126
- PATENT ABSTRACTS OF JAPAN (C-982)7 September 1992 & JP-A-4 146 953 ( AGENCY OF IND SCIENCE & TECHNOLOGY ) 20 May 1992

## Description

La présente invention concerne des compositions de moulage biodégradables comprenant au moins un amidon thermoplastique et au moins un polyester aliphatique thermoplastique qui peuvent être mises en oeuvre par des voies classiques.

Les matières thermoplastiques constituent des matériaux de choix pour la réalisation de nombreux articles industriels ou d'usage courant.

Ces matériaux posent toutefois, après usage, certains problèmes d'ordre écologique.

Ainsi, leur recyclage n'est pas toujours aisé et leur élimination naturelle ou forcée peut poser des problèmes de pollution.

En particulier, l'élimination naturelle des matières thermoplastiques, par exemple, dans des décharges ne peut être recommandée du fait de leur très lente dégradation et des sous-produits éventuellement formés durant cette dégradation.

Afin de résoudre ce type de problème, il a, dès lors, déjà été proposé de produire et de mettre en oeuvre des matières thermoplastiques biodégradables ou biocompatibles.

A titre d'exemple de telles matières, on peut notamment citer les polyesters aliphatiques thermoplastiques tels que notamment les polylactones qui se dégradent aisément sans poser des problèmes de pollution.

Toutefois, les polylactones disponibles actuellement sur le marché se caractérisent par des températures de fusion de l'ordre de 60 °C qui se révèlent trop faibles pour certaines applications et par des viscosités en fondu qui les rendent impropres à une mise en oeuvre satisfaisante par des techniques classiques telles que, par exemple, l'extrusion éventuellement soufflée.

Afin de résoudre ce problème, il a été déjà proposé de mélanger les polylactones avec des quantités importantes d'un autre polymère compatible.

Ainsi, il a été proposé de réaliser des mélanges polycaprolactones et de polyéthylène linéaire de basse densité (LLDPE) qui peuvent être mis en oeuvre par extrusion soufflée (Plastics Technology, 1990, mai, p. 41).

De même, on a également proposé de réaliser des mélanges de polycaprolactones et de polystyrène pouvant être transformés en des structures cellulaires sans recours à des agents soufflants chlorofluorés (JETRO, 1991, août, p. 38).

Toutefois, ces solutions ne permettent pas d'obtenir des produits entièrement biodégradables puisque le thermoplaste incorporé reste intact même après la dégradation des polycaprolactones.

Une solution pour résoudre de façon élégante les problèmes de mise en oeuvre des polylactones sans altérer la biodégradabilité finale consiste à incorporer dans celles-ci un polymère compatible et également biodégradable tel que, par exemple, un amidon thermoplastique.

Ainsi, il a déjà été proposé de réaliser des masses moulables constituées d'un mélange de polycaprolactones et d'amidon (COMLINE CHEMICALS AND MATERIALS, 1990, 28 mars, p. 2). De tels mélanges sont toutefois apparemment difficiles à réaliser en pratique industrielle puisqu'ils nécessitent une technique de dispersion spéciale. Les masses moulables ainsi obtenues présentent toutefois l'avantage d'être moins collantes et d'être moins sensibles à une dégradation rapide par l'eau que les amidons thermoplastiques compte tenu du caractère hydrophobe de la polycaprolactone.

On a également mis au point des amidons thermoplastiques pouvant être mis en oeuvre plus aisément par des techniques classiques.

Ainsi, dans la demande de brevet WO-90.10019 (Tomka) publié le 7 septembre 1990, on a proposé de plastifier l'amidon avec de l'eau et/ou d'autres additifs tels que la glycérine ce qui permet de réduire la température de fusion et, dans la demande de brevet européen EP-A-0 304 401, on revendique de déstructurer l'amidon et de le plastifier par un ajout d'eau.

Cependant, ces amidons thermoplastiques doivent être mis en oeuvre à des températures élevées, généralement supérieures à 150 °C, suite à une élimination progressive de l'eau, ce qui les rend difficilement incorporables à un polyester thermoplastique tel qu'une polylactone dont la température de fusion et la viscosité sont peu élevées.

La présente invention vise, dès lors, à fournir des compositions de moulage biodégradables comprenant au moins un amidon thermoplastique et au moins un polyester aliphatique thermoplastique qui peuvent être travaillées à une température de préférence inférieure à 150 °C, qui sont aisées à mettre en oeuvre et qui conduisent à des produits homogènes présentant de bonnes propriétés mécaniques.

L'invention concerne des compositions de moulage biodégradables qui se caractérisent en ce qu'elles comprennent de 5 à 60 % en poids d'au moins un amidon thermoplastique, de 30 à 94 % en poids d'au moins un polyester aliphatique thermoplastique et de 1 à 10 % en poids d'au moins un sel d'un acide hydroxycarboxylique.

Plus particulièrement, les compositions conformes à l'invention comprennent préférentiellement au moins 10 % et, de préférence, au plus 50 % en poids d'au moins un amidon thermoplastique, au moins 42 % et, de préférence, au plus 88 % en poids d'au moins un polyester aliphatique thermoplastique et au moins 2 % et, de préférence, au plus 8 % en poids d'au moins un sel d'un acide hydroxycarboxylique.

Il a, en effet, été constaté que l'incorporation d'un sel d'acide hydroxycarboxylique dans de telles compositions permet d'obtenir aisément des mélanges très homogènes qui peuvent être transformés en des produits utiles par des procédés de transformation classiques tels que notamment l'extrusion, le pressage, l'injection, le soufflage, etc.

Sous la désignation de polyester thermoplastique aliphatique, on entend désigner tout polyester thermoplastique aliphatique biodégradable.

A titre de polyester aliphatique thermoplastique, la demanderesse préfère mettre en oeuvre des polyesters et copolyesters aliphatiques dans lesquels les fonctions ester sont séparées par des groupes hydrocarbonés linéaires ou ramifiés comportant au moins 3 atomes de carbone.

A titre de tels polyesters et copolyesters, on peut notamment citer ceux dérivés des hydroxyalcanoates et, en particulier, du 3-hydroxybutyrate, du 3-hydroxyvalérate et du 3-hydroxypropionate tels que divulgués dans la demande de brevet européen EP-A-396,289 de IMPERIAL CHEM. INDS. PLC. publiée le 7 novembre 1990.

Une classe de polyesters thermoplastiques biodégradables convenant particulièrement dans le cadre de la présente invention est constituée par des homo- et copolymères de lactones telles que, par exemple, l'ε-caprolactone ou la δ-valérolactone. Les copolymères peuvent contenir divers types d'unités comonomériques. En général, il s'agit de copolymères de lactones différentes ou d'une lactone avec un oxyde d'oléfine tel que l'oxyde d'éthylène ou de propylène ou encore avec un mélange d'un glycol tel que l'éthylène glycol et d'un diacide carboxylique de préférence acyclique tel que l'acide adipique. Les copolymères de lactones peuvent contenir des quantités variables d'unités monomériques dérivées de lactones.

La demanderesse préfère toutefois mettre en oeuvre des homopolymères de lactones et en particulier ceux produits à partir d' ε-caprolactone.

Les amidons thermoplastiques utilisés dans la présente invention sont d'origine naturelle et végétale. Ils sont composés principalement d'amylose et/ou d'amylopectine se trouvant à des teneurs variables selon leur origine biologique. Ces amidons peuvent être déstructurés, prégélifiés ou modifiés après adjonction d'eau et/ou de plastifiants comme décrit dans la demande de brevet WO-90 10 019 mentionnée plus haut. A titre de plastifiants on peut citer, à titre non limitatif, la glycérine, la diglycérine, les polyglycérines, le sorbitol ainsi que des mélanges de ceux-ci. L'amidon thermoplastique mis en oeuvre dans la présente invention peut contenir jusqu'à 50 % en poids, et de préférence de 5 à 40 % en poids de plastifiants.

L'amidon mis en oeuvre peut être avantageusement un amidon de maïs riche en amylose tel que l'amidon commercialisé par ROQUETTE FRERES sous la marque EURYLON 7®, un amidon de maïs riche en amylopectine tel que l'amidon WAXILYS® commercialisé par la même société, un amidon de blé tel que l'amidon NUTRLYS® commercialisé également par la même société, un amidon de pomme de terre, etc. ou encore d'un mélange de tels amidons. En général, la demanderesse préfère mettre en oeuvre des amidons dont la teneur en amylopectine est au moins égale à 70 % car ceux-ci conduisent généralement à des produits particulièrement homogènes.

Le sel d'acide hydroxycarboxylique utilisé selon l'invention peut être un sel de tout acide comportant au moins une fonction hydroxyle et au moins une fonction carboxyle tels que les sels, de préférence, alcalins ou alcalino-terreux dérivés des acides lactique, glycolique, hydroxybutyrique, citrique, isocitrique, malique, tartronique, gluconique, maltobionique, lactobionique, glucuronique, glycérique, ribonique, xylonique, galactonique, mésovalonique, tartarique, mésoxalique, glucarique et leurs mélanges.

La demanderesse préfère toutefois mettre en oeuvre un sel alcalin ou alcalino-terreux de l'acide lactique et en particulier le lactate de sodium.

Les compositions de moulage conformes à l'invention peuvent en outre contenir d'autres ingrédients usuels et notamment un ou plusieurs polymères thermoplastiques et des agents de couplages polymères.

Les compositions de moulage conformes à l'invention peuvent notamment être avantageusement réalisées par malaxage en fondu. A cet effet on peut utiliser des appareillages classiques tels que des extrudeuses monovis, bivis contra ou corotatives, des malaxeurs internes, des comalaxeurs tels que des comalaxeurs de type MDK/E 46 ou MDK/E 70 commercialisés par la société Buss, etc.

Les compositions de moulage selon l'invention peuvent donc avantageusement se substituer aux matières thermoplastiques classiques non biodégradables pour réaliser, par les techniques de transformation classiques, de nombreux objets, tels que des films ou des corps creux utilisables notamment dans le domaine de l'emballage ou dans le domaine des articles à jeter.

Les compositions de moulages conformes à l'invention sont, en outre, illustrées par les exemples de réalisation pratique qui vont suivre.

Dans ces exemples, les compositions sont malaxées sur un malaxeur interne de laboratoire PLASTOGRAPH® Brabender suivant un cycle de chauffe et des durées de malaxage repris dans les exemples et, après malaxage, les mesures rhéologiques sont effectuées sur une plaque de 1 mm d'épaisseur obtenue par pressage à chaud.

Les exemples 1R, 2R, 3R, 4R, 5R et 7R qui sont donnés à titre comparatif sont exclus du cadre de la présente invention.

### Exemple 1R

On réalise un mélange comprenant 75 % en poids d'amidon de maïs normal non plastifié et 25 % en poids d'une polycaprolactone de la marque CAPA 650® produite par la demanderesse. On introduit 60 gr de ce mélange dans un malaxeur interne Brabender et on le malaxe à une température de conditionnement du pétrin de 150 °C pendant une durée de 6 minutes à une vitesse de rotation des cames de 50 tours par minute. Après malaxage, la masse fondue est prélevée et pressée à 150 °C pour obtenir une plaque de 1 mm d'épaisseur. On constate que la plaque ainsi obtenue est opaque, blanche et hétérogène et que celle-ci n'a aucune résistance à la déchirure.

### Exemple 2R

On procède comme dans l'exemple 1R mis à part que le mélange mis en oeuvre contient 50 % en poids d'un amidon de maïs normal, 25 % en poids de glycérine et 25 % en poids de polycaprolactone. La plaque obtenue est translucide, de coloration grise, d'apparence homogène. On constate, en outre, une nouvelle fois que la résistance à la déchirure est défectueuse.

### Exemple 3R

On procède comme dans l'exemple 2R mis à part que l'amidon mis en euvre est un amidon de la marque EURYLON® produit par ROQUETTE FRERES se caractérisant par une teneur élevée en amylose. On constate que la plaque obtenue présente une coloration brun-jaune et de structure hétérogène.

### Exemple 4R

On procède comme dans l'exemple 1R mis à part que le mélange mis en oeuvre contient 16 % en poids d'un amidon de la marque WAXILYS ^{R} produit par ROQUETTE FRERES, 9 % en poids de polyglycérine et 75 % en poids de polycaprolactone de la marque CAPA 650® produite par la demanderesse et que le malaxeur est conditionné à 120 °C. On constate que la plaque obtenue est translucide, d'apparence homogène mais grasse au toucher. On constate également que la plaque présente une résistance à la déchirure légèrement améliorée.

### Exemple 5R

On procède comme dans l'exemple 4R mis à part que le mélange mis en oeuvre contient 32 % en poids d'amidon (WAXILYS®), 18 % en poids de polyglycérine et 50 % en poids de polycaprolactone (CAPA 650®). La plaque obtenue est très grasse au toucher et présente une résistance à la déchirure qui laisse à désirer.

Il apparaît donc que les plaques obtenues selon les exemples comparatifs 1R à 5R et préparées à partir de mélanges exempts de sel d'acide hydroxycarboxylique ne présentent pas des propriétés satisfaisantes.

### Exemple 6

On procède comme dans l'exemple 5R mis à part que le mélange mis en oeuvre contient 15 % en poids d'amidon (WAXILYS®), 7,5 % en poids de polyglycérine, 2,5 % en poids de lactate de sodium et 75 % en poids de polycaprolactone (CAPA 650®). On constate cette fois que la plaque obtenue est homogène, sèche au toucher et résistante à la déchirure.

### Exemple 7R

On procède comme dans l'exemple 6 mis à part que le mélange mis en oeuvre contient 45 % en poids d'amidon (WAXILYS®), 23 % en poids de polyglycérine, 7 % en poids de lactate de sodium et 25 % en poids de polycaprolactone (CAPA 650®). La plaque obtenue qui est produite à partir d'un mélange contenant une proportion de polycaprolactone trop faible, est hétérogène et ne résiste pas à la déchirure.

### Exemple 8

On procède comme dans l'exemple 6 mis a part que le mélange mis en oeuvre contient 30 % d'amidon (WAXILYS®), 15 % en poids de polyglycérine, 5 % en poids de lactate de sodium et 50 % en poids de polycaprolactone (CAPA 650®). La plaque obtenue est homogène, translucide, sèche au toucher et résistante à la déchirure.

### Exemple 9

Des éprouvettes de 10 mm découpées dans les plaques obtenues selon les exemples 6 et 8 ont été testées, à 70 °C, par étirage sous un gradient de vitesse en traction constant de 1 sec⁻¹ au moyen d'un Rheometrics Elongational Rheometer (RER) commercialisé par la firme Rheometrics et on a mesuré, d'une part, l'allongement à la rupture et, d'autre part, la viscosité élongationnelle en fin de déformation c'est-à-dire juste avant la rupture.

Les résultats ainsi obtenus sont repris dans le tableau 1 qui suit.

**TABLEAU 1**

| exemple | allongement à la rupture : mm | viscosité Pa |
|---|---|---|
| 6 | 75 | 3,1 10⁴ |
| 8 | 25 | 4,2 10⁵ |

A titre comparatif, l'allongement à la rupture de la polycaprolactone est de 300 mm (en fait la polycaprolactone est liquide à 70 °C et s'étire sous son propre poids) et sa viscosité est de 1,4 10⁴ Pa.

Il apparaît, dès lors, que les compositions selon les exemples 6 et 8 présentent des propriétés rhéologiques autorisant une mise en oeuvre par des voies classiques.

## Revendications

1. Compositions de moulage biodégradables comprenant de 5 à 60 % en poids d'au moins un amidon thermoplastique, de 30 à 94 % en poids d'au moins un polyester aliphatique thermoplastique et de 1 à 10 % en poids d'au moins un sel d'un acide hydroxycarboxylique.

2. Compositions de moulage selon la revendication 1 caractérisées en ce que le polyester aliphatique thermoplastique est un polyester ou un copolyester dans lequel les fonctions ester sont séparées par des groupes hydrocarbonés linéaires ou ramifiés comportant plus de trois atomes de carbone.

3. Compositions selon la revendication 1 caractérisées en ce que le polyester aliphatique thermoplastique est un hopolymère ou un copolymère de lactones.

4. Compositions selon la revendication 1 caractérisées en ce que le polyester aliphatique thermoplastique est une poly-ε-caprolactone.

5. Compositions selon la revendication 1 caractérisées en ce que le polyester aliphatique thermoplastique est choisi dans le groupe formé par les polyesters et copolyesters dérivés des hydroxyalcanoates.

6. Compositions selon la revendication 1 caractérisées en ce qu'elles sont produites à partir d'un amidon déstructuré, prégélifié ou modifié après adjonction d'eau et/ou de plastifiants tels que la glycérine, la diglycérine, les polyglycérines, le sorbitol ainsi des mélanges de ceux-ci.

7. Compositions selon la revendication 1 caractérisées en ce que l'amidon thermoplastique présente une teneur en amylopectine au moins égale à 70 %.

8. Compositions selon la revendication 1 caractérisées en ce que l'amidon thermoplastique contient jusqu'à 50 % en poids de plastifiant.

9. Compositions selon la revendication 1 caractérisées en ce que le sel d'acide hydroxycarboxylique est un sel, de préférence, alcalin ou alcalino-terreux dérivé des acides lactique, glycolique, hydroxybutyrique, citrique, isocitrique, malique, tartronique, gluconique, maltobionique, lactobionique, glucuronique, glycérique, ribonique, xylonique, galactonique, mésovalonique, tartarique, mésoxalique ou glucarique et leurs mélanges.

10. Compositions selon la revendication 1 caractérisées en ce que le sel d'acide hydroxycarboxylique est le lactate de sodium.

11. Objets moulés tels que des films ou des corps creux produits à partir de compositions selon les revendications 1 à 10.

## Patentansprüche

1. Biologisch abbaubare Formzusammensetzungen, die 5 bis 60 Gew.-% wenigstens einer thermoplastischen Stärke, 30 bis 94 Gew.-% wenigstens eines thermoplastischen aliphatischen Polyesters und 1 bis 10 Gew.-% wenigstens eines Salzes einer Hydroxycarbonsäure umfassen.

2. Formzusammensetzungen gemäß Anspruch 1, dadurch gekennzeichnet, daß der thermoplastische aliphatische Polyester ein Polyester oder ein Copolyester ist, in dem die Esterfunktionen durch lineare oder verzweigte Kohlenwasserstoffgruppen, die mehr als drei Kohlenstoffatome umfassen, getrennt sind.

3. Zusammensetzungen gemäß Anspruch 1, dadurch gekennzeichnet, daß der thermoplastische aliphatische Polyester ein Lactonhomopolymer oder -copolymer ist.

4. Zusammensetzungen gemäß Anspruch 1, dadurch gekennzeichnet, daß der thermoplastische aliphatische Polyester ein Poly-ε-caprolacton ist.

5. Zusammensetzungen gemäß Anspruch 1, dadurch gekennzeichnet, daß der thermoplastische aliphatische Polyester aus der Gruppe ausgewählt ist, die von den von Hydroxyalkanoaten abgeleiteten Polyestern und Copolyestern gebildet wird.

6. Zusammensetzungen gemäß Anspruch 1, dadurch gekennzeichnet, daß sie aus einer nach Zugabe von Wasser und/oder Weichmachern wie Glycerin, Diglycerin, Polyglycerinen, Sorbit sowie deren Gemischen destrukturierten, vorgelierten oder modifizierten Stärke hergestellt werden.

7. Zusammensetzungen gemäß Anspruch 1, dadurch gekennzeichnet, daß die thermoplastische Stärke einen Amylopektin-Gehalt von wenigstens gleich 70% aufweist.

8. Zusammensetzungen gemäß Anspruch 1, dadurch gekennzeichnet, daß die thermoplastische Stärke bis zu 50 Gew.-% Weichmacher enthält.

9. Zusammensetzungen gemäß Anspruch 1, dadurch gekennzeichnet, daß das Hydroxycarbonsäuresalz vorzugsweise ein Alkali- oder Erdalkalisalz ist, das von Milchsäure, Glykolsäure, Hydroxybuttersäure, Citronensäure, Isocitronensäure, Äpfelsäure, Tartronsäure, Gluconsäure, Maltobionsäure, Lactobionsäure, Glucuronsäure, Glycerinsäure, Ribonsäure, Xylonsäure, Galactonsäure, Mesovalonsäure, Weinsäure, Mesoxalsäure oder Glucarsäure und deren Gemischen abgeleitet ist.

10. Zusammensetzungen gemäß Anspruch 1, dadurch gekennzeichnet, daß das Hydroxycarbonsäuresalz Natrium lactat ist.

11. Formteile wie Filme oder Hohlkörper, die aus Zusammensetzungen gemäß den Ansprüchen 1 bis 10 hergestellt werden.

## Claims

1. Biodegradable moulding compositions comprising from 5 to 60 % by weight of at least one thermoplastic starch, from 30 to 94 % by weight of at least one thermoplastic aliphatic polyester, and from 1 to 10 % by weight of at least one salt of a hydroxycarboxylic acid.

2. Moulding compositions according to Claim 1, characterised in that the thermoplastic aliphatic polyester is a polyester or copolyester in which the ester functional groups are separated by linear or branched hydrocarbon groups containing more than three carbon atoms.

3. Compositions according to Claim 1, characterised in that the thermoplastic aliphatic polyester is a lactone homopolymer or copolymer.

4. Compositions according to Claim 1, characterised in that the thermoplastic aliphatic polyester is a poly-ε-caprolactone.

5. Compositions according to Claim 1, characterised in that the thermoplastic aliphatic polyester is chosen from the group consisting of polyesters and copolyesters derived from hydroxyalkanoates.

6. Compositions according to Claim 1, characterised in that they are produced from a destructured, pregelled or modified starch after addition of water and/or of plasticisers such as glycerine, diglycerine, polyglycerines, sorbitol and mixtures thereof

7. Compositions according to Claim 1, characterised in that the thermoplastic starch has an amylopectin content of at least 70 %.

8. Compositions according to Claim 1, characterised in that the thermoplastic starch contains up to 50 % by weight of plasticiser.

9. Compositions according to Claim 1, characterised in that the hydroxycarboxylic acid salt is preferably an alkali or alkaline-earth metal salt derived from lactic, glycolic, hydroxybutyric, citric, isocitric, malic, tartronic, gluconic, maltobionic, lactobionic, glucuronic, glyceric, ribonic, xylonic, galactonic, mesovalonic, tartaric, mesoxalic or glucaric acids and mixtures thereof.

10. Compositions according to Claim 1, characterised in that the hydroxycarboxylic acid salt is sodium lactate.

11. Moulded objects such as films or hollow bodies produced from compositions according to Claims 1 to 10.
